(19) Europäisches Patentamt
European Patent Office
Office européen des brevets

(11) **EP 4 082 848 B1**

(12) **EUROPEAN PATENT SPECIFICATION**

(45) Date of publication and mention
of the grant of the patent:
**01.05.2024 Bulletin 2024/18**

(21) Application number: **20909407.7**

(22) Date of filing: **24.11.2020**

(51) International Patent Classification (IPC):
**B60W 30/08** (2012.01)    **G08G 1/16** (2006.01)
**B60W 30/095** (2012.01)    **B60W 60/00** (2020.01)

(52) Cooperative Patent Classification (CPC):
**B60W 60/0027; B60W 30/095; B60W 30/0953;**
**B60W 30/0956; B60W 60/00; G08G 1/166;**
B60W 2720/10

(86) International application number:
**PCT/CN2020/131002**

(87) International publication number:
**WO 2021/135728 (08.07.2021 Gazette 2021/27)**

(54) **DETERMINATION DEVICE FOR COLLISION PREDICTION OF AUTONOMOUS VEHICLE**

VORRICHTUNG ZUR KOLLISIONSVORHERSAGE EINES AUTONOMEN FAHRZEUGS

DISPOSITIF DE DÉTERMINATION POUR UNE PRÉDICTION DE COLLISION D'UN VÉHICULE AUTONOME

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.12.2019 CN 201911398952**

(43) Date of publication of application:
**02.11.2022 Bulletin 2022/44**

(73) Proprietor: **Yutong Bus Co., Ltd.**
**Zhengzhou, Henan 450061 (CN)**

(72) Inventors:
• **ZUO, Shuai**
**Zhengzhou, Henan 450061 (CN)**
• **ZHU, Min**
**Zhengzhou, Henan 450061 (CN)**
• **LI, Xingjia**
**Zhengzhou, Henan 450061 (CN)**
• **CAI, Lisong**
**Zhengzhou, Henan 450061 (CN)**

(74) Representative: **Gulde & Partner**
**Patent- und Rechtsanwaltskanzlei mbB**
**Wallstraße 58/59**
**10179 Berlin (DE)**

(56) References cited:
EP-A1- 2 763 120          EP-A2- 3 135 550
CN-A- 101 837 782       CN-A- 102 806 912
CN-A- 104 882 025       CN-A- 108 062 600
CN-A- 108 536 149       CN-A- 109 814 544
CN-A- 110 221 595       CN-A- 110 550 029
DE-A1-102012 208 988   US-A1- 2019 354 781

• BRUNO DIEGO RENAN ET AL: "Advanced Driver Assistance System Based on Automated Routines for the Benefit of Human Faults Correction in Robotics Vehicles", 2018 LATIN AMERICAN ROBOTIC SYMPOSIUM, 2018 BRAZILIAN SYMPOSIUM ON ROBOTICS (SBR) AND 2018 WORKSHOP ON ROBOTICS IN EDUCATION (WRE), IEEE, 6 November 2018 (2018-11-06), pages 112-117, XP033478587, DOI: 10.1109/LARS/SBR/WRE.2018.00029 [retrieved on 2018-12-24]

## Description

**TECHNICAL FIELD**

The present invention belongs to the technical field of autonomous driving, and in particular, relates to a determination device for collision prediction of an autonomous vehicle.

**BACKGROUND**

With the development of science and technology, unmanned driving technology gradually enters people's life. With the rapid development of the unmanned driving technology, scientific research that originally only stays in laboratories is gradually turning to commercial application. To implement complete and safe unmanned driving, path planning and speed planning of an unmanned driving vehicle are one of the core technologies of the unmanned driving.

In path planning, the environment needs to be perceived. During the perception of the environment, the detection of an obstacle around an unmanned driving vehicle is an important part of environmental perception. When there is no obstacle, the unmanned driving vehicle preferentially travels along a lane centerline of the lane in which the unmanned driving vehicle is located. When there is an obstacle, the unmanned driving vehicle needs to perform an appropriate and effective obstacle avoidance behavior along an originally planned path.

For example, Chinese Invention Patent Application No. CN109960261A discloses a dynamic obstacle avoidance method based on collision detection. In the method, an expected trajectory of a vehicle is constructed through preliminary planning, and collision detection is performed according to a received predicted trajectory of a dynamic obstacle and the expected trajectory of the vehicle, to re-plan a travel speed and/or path of the vehicle, obtain a travel speed and/or path data of the vehicle when there is no collision, and reconstruct the expected trajectory of the vehicle, to avoid the dynamic obstacle, so that an unmanned vehicle autonomously avoids the dynamic obstacle. In the method, collision prediction is performed according to an expected trajectory of a vehicle, a predicted trajectory of an obstacle, and sizes of outlines of the vehicle and the obstacle (for example, a two-dimensional or three-dimensional rectangular frame), and convex bodies (frames) of the obstacle and the vehicle need to be reconstructed respectively according to the predicted trajectory of the obstacle and an expected trajectory point sequence of the vehicle. The trajectories may be imagined as rails, and the vehicle and the obstacle may be imagined as trains. According to the slide of their respective trajectories at different moments, it is determined whether the vehicle is about to collide with the obstacle. The detection method is complex and needs a large amount of calculation. Moreover, in the method, only the closest distance between a current trajectory and a dynamic obstacle is calculated, but a moment and a position at which a collision is occurring cannot be given. The given information is insufficient for supporting appropriate avoidance by the vehicle. As the vehicle decelerates and stops based on the current trajectory, the efficiency is excessively low if it decelerates and stops in all cases.

Conventional methods are known from EP3135550A2.

**SUMMARY**

The present invention provides a determination device for collision prediction of an autonomous vehicle, to resolve the problems of complex detection and a large amount of calculation when determine whether an auto vehicle is about to collide with an obstacle in the prior art.

To resolve the foregoing technical problems, technical solutions and beneficial effects of the present invention are as follows:

A determination device for collision prediction of an autonomous vehicle, comprising a memory and a processor, wherein the processor is configured to execute instructions stored in the memory, wherein the processor is further configure to:

> 1) plan predicted obstacle paths of points on edges of an obstacle according to movement of the obstacle, and plan predicted auto vehicle paths of points on edges of an auto vehicle according to movement of the auto vehicle;
> 2) determine whether there are intersections between the predicted obstacle paths and the predicted auto vehicle paths: in a case that there are intersections, determine positions of the intersections, predicted auto vehicle paths in which the intersections are located, and auto vehicle edge points corresponding to the intersections, select a length of a shortest predicted auto vehicle path between each intersection and its corresponding auto vehicle edge point at a current moment as a minimum distance, use a moment when the intersection exists for the first time as a start moment of a collision, and use a moment when the intersection exists for the last time as an end moment of a collision; and
> 3) according to an auto vehicle travel distance, a set safety distance, and the minimum distance, determine whether the auto vehicle is about to collide with the obstacle, wherein the auto vehicle travel distance is a distance traveled by the auto vehicle from the current moment to any moment in a possible collision time period, and the possible collision time period is from the start moment to the end moment.

Beneficial effects thereof are as follows: According to the present invention, an obstacle and an auto vehicle are no longer considered as points for performing corresponding path planning, but instead both the obstacle and the auto vehicle are considered as polygons in two-dimensional level with a bulge. Points on edges of the polygons at which a collision is likely to occur are determined according to a travel direction of the obstacle and a travel direction of the auto vehicle, to perform corresponding predicted obstacle path planning and predicted auto vehicle path planning. In addition, in a case that there are intersections between predicted obstacle paths and predicted auto vehicle paths, it is determined, according to an auto vehicle travel distance, a set safety distance, and a minimum distance, whether the auto vehicle is about to collide with the obstacle, and then to calculate a moment of a collision, and accurately determine a specific position on a raised edge of the auto vehicle at which the auto vehicle is about to collide with the obstacle, thereby more accurately predicting whether the auto vehicle is about to collide with the obstacle. In a case that both the auto vehicle and the obstacle are considered as points for path planning, since the raised edge of the auto vehicle is not considered, the determining precision is very low when determining whether a collision is about to occur. The method is simple and requires a small amount of calculation. Moreover, the method is applicable to structured roads such as straight roads, curvy roads, and crossings, as well as unstructured roads, and differentiated processing is not required.

As a further improvement of the device, in step 3), to accurately determine whether the auto vehicle is about to collide with the obstacle, it is determined whether a first difference between a travel distance of the auto vehicle at the start moment of the collision and the set safety distance is greater than the minimum distance. In a case that the first difference is greater than the minimum distance, it is determined that the auto vehicle is not about to collide with the obstacle.

The start moment is the earliest moment at which a vehicle may collide with an obstacle. In a case that a travel distance of the vehicle before the earliest moment at which the collision may occur is already greater than a distance between the vehicle and the earliest collision point at which the collision may occur (greater than and beyond the corresponding set safety distance), that is, a speed of the vehicle is fast enough for the vehicle to travel past and away from a path intersection with the obstacle, there is no longer a collision between the vehicle and the obstacle. Therefore, a current acceleration can be maintained or an acceleration can be increased without a risk of a collision.

The start moment corresponds to the earliest path intersection at which a collision may occur, and the end moment corresponds to the latest path intersection at which a collision may occur. The start moment and the end moment may be calculated according to a moving speed of the obstacle and distances between the obstacle and the corresponding intersections.

As a further improvement of the device, in step 3), to accurately determine whether the auto vehicle is about to collide with the obstacle, it is determined whether a second difference between a travel distance of the auto vehicle at any moment between the start moment of the collision and the end moment of a collision and the set safety distance is less than or equal to the minimum distance. In a case that the second difference is less than or equal to the minimum distance, it is determined that the auto vehicle is not about to collide with the obstacle.

Before any moment between the start moment of a possible collision and the end moment of a possible collision, in a case that a travel distance of the vehicle remains less than a minimum distance of distances between the vehicle and collision points (and a sufficient set safety distance is reserved), the vehicle can maintain a current acceleration or reduce an acceleration without a risk of a collision.

As a further improvement of the device, in step 2), in a case that there are no intersections, it is determined that the auto vehicle is not about to collide with the obstacle, and the auto vehicle is controlled to reduce an acceleration, increase an acceleration, or maintain a current acceleration to travel.

As a further improvement of the device, in step 3), to achieve objectives of avoiding a collision, improving the traffic efficiency, and improving the speed smoothness, in a case that the first difference is greater than the minimum distance, the auto vehicle is controlled to maintain a current acceleration to travel or increase an acceleration to travel.

As a further improvement of the device, in step 3), to achieve objectives of avoiding a collision, improving the traffic efficiency, and improving the speed smoothness, in a case that the second difference is less than or equal to the minimum distance, the auto vehicle is controlled to maintain a current acceleration to travel.

As a further improvement of the device, to achieve objectives of avoiding a collision, improving the traffic efficiency, and improving the speed smoothness, in a case that the first difference is less than or equal to the minimum distance, it is determined that the auto vehicle is about to collide with the obstacle, and the auto vehicle is controlled to reduce an acceleration to travel.

As a further improvement of the device, to achieve objectives of avoiding a collision, improving the traffic efficiency, and improving the speed smoothness, in a case that the second difference is greater than the minimum distance, it is determined that the auto vehicle is about to collide with the obstacle, and the auto vehicle is controlled to reduce an acceleration to travel.

As a further improvement of the device, in step 1), for accurate prediction, the predicted auto vehicle paths of the points on the edges of the auto vehicle are planned according to the movement of the auto vehicle by using a tentacle algorithm.

## BRIEF DESCRIPTION OF THE DRAWINGS

FIG. 1 is a schematic diagram of an overall solution of a method embodiment executed by the determination device of the present invention.

FIG. 2 is a schematic principle diagram of collision prediction of a method embodiment executed by the determination device of the present invention.

DETAILED DESCRIPTION

Method Embodiment:

The embodiment provides a determination method for collision prediction of an autonomous vehicle. In the method, movement of a moving obstacle (hereinafter referred to as an obstacle) and movement of an autonomous vehicle (hereinafter referred to as an auto vehicle) are combined to predict whether the obstacle is about to collide with the auto vehicle in a future time period, and then a speed of the auto vehicle is controlled correspondingly to achieve objectives of avoiding a collision, improving the traffic efficiency, and improving the speed smoothness.

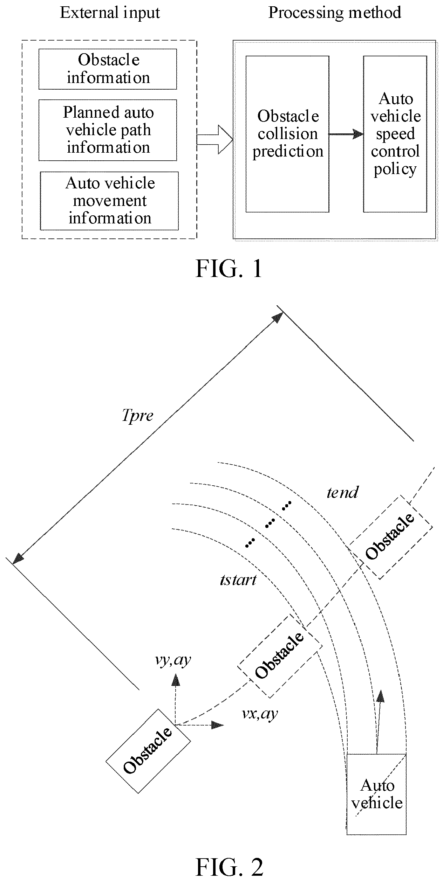

The method may be applicable to structured roads such as straight roads, curvy roads, and crossings as well as unstructured roads, and differentiated processing is not required. To implement the method, the overall solution is formed by two parts: an external input and a processing method. As shown in FIG. 1, the external input includes:

1) obstacle information: information of a two-dimensional polygon (namely, positions coordinate of edge points on the polygon relative to a vehicle) and movement information (a transverse speed $v_x$, a longitudinal speed $v_y$, a transverse acceleration $a_x$, and a longitudinal acceleration $a_y$) of an obstacle around the vehicle in a vehicle coordinate system at a start moment;
2) auto vehicle movement information: a speed $v_{car}$ and a longitudinal acceleration $a_{car}$ of an auto vehicle at a current moment; and
3) planned auto vehicle path information: path information of which the auto vehicle is going to travel within a future distance at the current moment, that is, information of discrete coordinate points in the vehicle coordinate system, where a distance interval between two adjacent points is fixed as $L_0$.

The specific processing method includes:

1) obstacle collision prediction: according to the obstacle information, the auto vehicle movement information, and the planned auto vehicle path information that are inputted, predicting whether the vehicle is about to collide with the obstacle; and
2) vehicle speed control policy: according to a predicted collision status, controlling the vehicle to accelerate or decelerate.

The specific processing method is the determination method for collision prediction of an autonomous vehicle of this embodiment, and the method is described below in detail.

Step 1. The auto vehicle is considered as an object of a two-dimensional polygon. According to movement of the auto vehicle, predicted auto vehicle paths of points on edges of the polygon are planned by using a tentacle algorithm. For points on which path planning is specifically performed, a status of the auto vehicle needs to be considered. For example, as shown in FIG. 2, the auto vehicle is considered as a rectangle seen from the top, and the top of the rectangle is a vehicle head part of the auto vehicle (namely, a front direction of the auto vehicle). In this figure, predicted paths of three points in the front direction of the auto vehicle are planned, which correspond to three rightmost dashed lines (dashed lines ①②③ planned by the auto vehicle) of four dashed lines from the lower right to the upper left in the figure; and a predicted path of one point in a lateral direction of the auto vehicle is also planned, which corresponds to a leftmost dashed line of the four dashed lines from the lower right to the upper left in the figure (a dashed line ④ planned by the auto vehicle), so that an area swept by a vehicle body can be obtained. Based on this, each predicted auto vehicle path is discretized into a plurality of points, each point has its corresponding coordinate, and distance intervals between two points are the same, being $L_0$.

Step 2. The obstacle is similarly considered as an object of a two-dimensional polygon, a predicted duration is set as $T_{pre}$, and a discrete time interval is set as $T_0$. According to movement of the obstacle, predicted obstacle paths of points on edges of the polygon are planned, that is, position information of the points on the edges of the polygon at each moment (with $T_0$ as an interval) in a future $T_{pre}$. For example, as shown in FIG. 2, the obstacle is also considered as a rectangle seen from the top, and the upper right of the rectangle is a front part of the obstacle. In the figure, a predicted path of one point in a front direction of the obstacle (a vehicle head part of the obstacle) is planned, which corresponds to a dashed line from the lower left to the upper right in the figure. Specific formulas are as follows:

$$x_{nt} = x_{n0} + v_x t + \frac{1}{2} a_x t^2$$

$$y_{nt} = y_{n0} + v_y t + \frac{1}{2} a_y t^2$$

$$v_{xt} = v_x + a_x t$$

$$v_{yt} = v_y + a_y t$$

In the formulas, $n$ is a point, $t$ is a future moment, $x_{n0}$ and $y_{n0}$ are initial positions of the point $n$, $x_{nt}$ and $y_{nt}$ are predicted positions at the moment $t$, $v_{xt}$ and $v_{yt}$ are predicted speeds at the moment $t$, $a_x$ and $a_y$ are respectively a transverse acceleration and a longitudinal acceleration of the obstacle at the current moment, and $v_x$ and $v_y$ are respectively a transverse speed and a longitudinal speed of the obstacle at the current moment.

It should be noted that, points on the edges on which path planning is specifically performed in step 1 and step 2 need to be determined correspondingly according to a travel direction of the obstacle and a travel direction of the auto vehicle. For example, in FIG. 2, there is no need to determine a predicted obstacle path on a right-side edge of the auto vehicle.

Step 3. According to predicted auto vehicle paths of the auto vehicle and predicted obstacle paths of the obstacle, it is determined whether there are intersections between the predicted auto vehicle paths and the predicted obstacle paths. In a case that there are no intersections, step 4 is performed; and in a case that there are intersections, step 5 is performed.

Step 4. There are no intersections between the predicted auto vehicle paths and the predicted obstacle paths, indicating that the obstacle is not about to collide with the auto vehicle in the $T_{pre}$ time. In this case, a speed of the auto vehicle is not limited, and the auto vehicle may accelerate, decelerate, or maintain an original speed.

Step 5. There are intersections between the predicted auto vehicle paths and the predicted obstacle paths, indicating that there is a possibility of collision between the obstacle and the auto vehicle in the $T_{pre}$ time. In this case, positions of the intersections, predicted auto vehicle paths in which the intersections are located, and auto vehicle edge points corresponding to the intersections are determined, a length of a shortest predicted auto vehicle path between each intersection and its corresponding auto vehicle edge point at a current moment in the $T_{pre}$ is selected as a minimum distance $L_{t\min}$, a moment of the first intersection is used as a start moment $t_{start}$ of a collision, and a moment of the last intersection is used as an end moment $t_{end}$ of the collision. The start moment $t_{start}$ and the end moment $t_{end}$ may be calculated according to a moving speed of the obstacle and distances between the obstacle and the corresponding intersections.

A status that the auto vehicle in a plurality of predicted auto vehicle paths is about to collide with the obstacle at the same time may occur at the specific moment $t$ at which the collision occurs. A distance $L_{mt} = i_m L_0$, where $m$ represents a serial number of a predicted auto vehicle path, and a position at which the vehicle body (for example, a front surface, or a side surface) collides with the obstacle can be determined through $m$; and $i_m$

represents the number of discrete points on the predicted auto vehicle path $m$. A specific formula is:

$$L_{t\min} = \min(i_0, i_1, ..., i_m) \cdot L_0$$

Step 6. A travel distance of the auto vehicle from $t_{start}$ to $t_{end}$ is traversed, and formulas are as follows:

$$S_t = v_{car}t + \frac{1}{2}a_{car}t^2$$

$$v_{tcar} = v_{car} + a_{car}t$$

In the formulas, $S_t$ and $v_{tcar}$ are respectively an auto vehicle travel distance and a speed of the auto vehicle at the moment $t$, and $v_{car}$ and $a_{car}$ are respectively an initial speed and an acceleration of the auto vehicle at the start moment.

Step 7. It is determined, according to the auto vehicle travel distance $S_t$, a set front collision safety distance $S_{lon}$, a set lateral collision safety distance $S_{lat}$, and the minimum distance $L_{t\min}$ (refers to the closest distance at which the auto vehicle is about to collide with the obstacle), whether the auto vehicle is about to collide with the obstacle.

1) Determine whether $S_t - S_{lon} \leq L_{t\min}$ : if yes, it is determined that the auto vehicle is not about to collide with the obstacle, and the auto vehicle is controlled to travel normally, and maintain a current acceleration to travel; or otherwise, it is determined that the auto vehicle is about to collide with the obstacle, and the auto vehicle should travel at an acceleration lower than the current acceleration.

The start moment is the earliest moment at which a vehicle may collide with an obstacle. In a case that a travel distance of the vehicle before the earliest moment at which the collision may occur is already greater than a distance between the vehicle and the earliest collision point at which the collision may occur (greater than and beyond the corresponding set safety distance), that is, a speed of the vehicle is fast enough for the vehicle to travel past and away from a path intersection with the obstacle, there is no longer a possibility of a collision between the vehicle and the obstacle. Therefore, a current acceleration can be maintained or an acceleration can be increased without a risk of a collision. In a case that the travel distance of the vehicle before the earliest moment at which the collision may occur is not greater than a distance between the vehicle and the earliest collision point at which the collision may occur (or a sufficient safety distance is not reserved), there is a possibility of a collision. Therefore, the acceleration should be reduced, to avoid a collision.

2) Determine whether $S_t - S_{lat} > L_{tmin}$ and $t = t_{start}$: if yes, it is determined that the auto vehicle is not about to collide with the obstacle and the auto vehicle travels preferentially, and the auto vehicle may travel at or above the current acceleration; or otherwise, it is determined that the auto vehicle is about to collide with the obstacle, and the auto vehicle should travel below the current acceleration.

Before any moment between the start moment of a possible collision and the end moment of a possible collision, in a case that a travel distance of the vehicle remains less than a minimum distance of distances between the vehicle and collision points (and a sufficient set safety distance is reserved), the vehicle can maintain a current acceleration or reduce an acceleration without a risk of a collision. In a case that the travel distance of the vehicle is greater than or equal to the minimum distance of distances between the vehicle and the collision points (or the sufficient safety distance is not reserved), there is a possibility of a collision. Therefore, the acceleration should be reduced, to avoid a collision.

On the whole, in the method, expected or planned trajectories of a vehicle are deflected along an outline of a frame of a vehicle body (a projection in a travel direction). Each trajectory means a trajectory through which a corresponding vehicle body contour point is about to move, similar to many tentacles that are generated from the vehicle body to detect whether there is an obstacle in a to-be-traveled area, just like whiskers of a cat. For prediction of an obstacle, a position of a frame of the obstacle at a future specific moment is predicted according to a current position, a movement state, and a size of the frame of the obstacle. In this way, it is determined, according to tentacle points positions of the auto vehicle and the position of the frame of the obstacle, which point is in the frame, which means to determine whether there is an interference, and further determine, according to a condition of a safety distance, whether a collision is about to occur for the control of the auto vehicle.

Moreover, a moment, a distance, and a position at which the collision occurs may be obtained by using the method, and the obtained information is more comprehensive, so that the auto vehicle can decelerate for avoidance (including yielding) or travel normally (including traveling at a uniform speed or with an acceleration) according to the above information of the collision. In the method, collision detection is performed by using the tentacle algorithm. The detection method is simple and easy to implement, and requires a small amount of calculation.

Device Embodiment of the present invention:

This embodiment provides a determination device for collision prediction of an autonomous vehicle, and the device includes a memory and a processor. The memory and the processor are electrically connected with each other in a direct or indirect manner, to achieve data transmission or interaction. The processor herein may be a vehicle controller, or a processor added to the vehicle. The processor added to the vehicle may be a general-purpose processor, for example, a central processing unit CPU, or another programmable logical device, for example, a digital signal processor DSP. The processor is configured to execute instructions stored in the memory to implement the determination method for collision prediction of an autonomous vehicle described in the method embodiment. Since the method has been described in detail in the method embodiment, details are not described herein again.

Although the content of the present invention has been described in detail through the above preferred embodiments, it should be understood that the above description should not be considered as a limitation on the present invention. For a person skilled in the art, various modifications and replacements to the present invention will be apparent after reading the above content. Therefore, the protection scope of the present invention should be subject to the appended claims.

**Claims**

1.  A determination device for collision prediction of an autonomous vehicle,

    comprising a memory and a processor,
    wherein the processor is configured to execute instructions stored in the memory,
    wherein the processor is further configured to:

        1) plan predicted obstacle paths of points on edges of an obstacle according to movement of the obstacle, and plan predicted auto vehicle paths of points on edges of an auto vehicle according to movement of the auto vehicle;
        **characterized in that** the processor is further configured to:

        2) determine whether there are intersections between the predicted obstacle paths and the predicted auto vehicle paths: determine, in a case that there are intersections, positions of the intersections, predicted auto vehicle paths in which the intersections are located, and auto vehicle edge points corresponding to the intersections, select a length of a shortest predicted auto vehicle path between the each intersection and its corresponding auto vehicle edge point at a current moment as a minimum distance, use a moment of the first intersection as a start moment of a collision, and use a moment of the last intersection as an end moment of a collision; and

3) determine, according to an auto vehicle travel distance, a set safety distance, and the minimum distance, whether the auto vehicle is about to collide with the obstacle, wherein the auto vehicle travel distance is a distance traveled by the auto vehicle from the current moment to any moment in a possible collision time period, and the possible collision time period is from the start moment to the end moment.

2. The determination device for collision prediction of an autonomous vehicle according to claim 1, wherein the processor is further configured to: in step 3), determine whether a first difference between a travel distance of the auto vehicle at the start moment of the collision and the set safety distance is greater than the minimum distance, and in a case that the first difference is greater than the minimum distance, determine that the auto vehicle is not about to collide with the obstacle.

3. The determination device for collision prediction of an autonomous vehicle according to claim 1 or 2, wherein the processor is further configured to: in step 3), determine whether a second difference between a travel distance of the auto vehicle at any moment between the start moment of the collision and the end moment of the collision and the set safety distance is less than or equal to the minimum distance, and determine, in a case that the second difference is less than or equal to the minimum distance, that the auto vehicle is not about to collide with the obstacle.

4. The determination device for collision prediction of an autonomous vehicle according to claim 1, wherein the processor is further configured to: in step 2), determine, in a case that there are no intersections, that the auto vehicle is not about to collide with the obstacle, and control the auto vehicle to reduce an acceleration, increase an acceleration, or maintain a current acceleration to travel.

5. The determination device for collision prediction of an autonomous vehicle according to claim 2, wherein the processor is further configured to: in step 3), control, in a case that the first difference is greater than the minimum distance, the auto vehicle to maintain a current acceleration to travel or increase an acceleration to travel.

6. The determination device for collision prediction of an autonomous vehicle according to claim 3, wherein the processor is further configured to: in step 3), control, in a case that the second difference is less than or equal to the minimum distance, the auto vehicle to maintain a current acceleration to travel.

7. The determination device for collision prediction of an autonomous vehicle according to claim 2, wherein the processor is further configured to: determine, in a case that the first difference is less than or equal to the minimum distance, that the auto vehicle is about to collide with the obstacle, and control the auto vehicle to reduce an acceleration to travel.

8. The determination device for collision prediction of an autonomous vehicle according to claim 3, wherein the processor is further configured to: determine, in a case that the second difference is greater than the minimum distance, that the auto vehicle is about to collide with the obstacle, and control the auto vehicle to reduce an acceleration to travel.

9. The determination device for collision prediction of an autonomous vehicle according to claim 1, wherein the processor is further configured to: in step 1), plan, according to the movement of the auto vehicle, the predicted auto vehicle paths of the points on the edges of the auto vehicle by using a tentacle algorithm.

**Patentansprüche**

1. Bestimmungsvorrichtung zur Kollisionsvorhersage eines autonomen

     Fahrzeugs, die einen Speicher und einen Prozessor umfasst,
     wobei der Prozessor dazu ausgestaltet ist, im Speicher gespeicherte Anweisungen auszuführen, wobei der Prozessor ferner dazu ausgestaltet ist, um:

         1) vorhergesagte Wege eines Hindernisses von Punkten auf Rändern eines Hindernisses gemäß der Bewegung des Hindernisses zu planen und vorhergesagten Wege eines autonomen Fahrzeugs von Punkten auf Rändern eines autonomen Fahrzeugs gemäß der Bewegung des autonomen Fahrzeugs zu planen;
         **dadurch gekennzeichnet, dass** der Prozessor ferner dazu ausgestaltet ist, um:

         2) zu bestimmen, ob Schnittpunkte zwischen den vorhergesagten Wegen des Hindernisses und den vorhergesagten Wegen des autonomen Fahrzeugs existieren: in einem Fall, in dem Schnittpunkte existieren, die Positionen der Schnittpunkte, vorhergesagte Wege des autonomen Fahrzeugs, auf denen sich die Schnittpunkte befinden, und den Schnittpunkten entsprechende Punkte auf den Rändern des autonomen Fahrzeugs zu bestimmen, eine Länge eines kürzesten vorausgesagten Wegs des autonomen Fahrzeugs zwischen jedem Schnittpunkt und dem entsprechenden Punkt auf den Rändern des autonomen Fahrzeugs zu einem aktuellen Zeitpunkt als Mindestabstand zu wählen, einen Zeitpunkt des ersten Schnittpunkts als Startzeitpunkt einer Kollision zu verwenden und einen Zeitpunkt des letzten Schnittpunkts als Endzeitpunkt einer Kollision zu verwenden; und

3) gemäß der Fahrstrecke eines autonomen Fahrzeugs, einem eingestellten Sicherheitsabstand und dem Mindestabstand zu bestimmen, ob das autonome Fahrzeug gleich mit dem Hindernis kollidiert, wobei die Fahrstrecke des autonomen Fahrzeugs eine Strecke ist, die das autonome Fahrzeug vom aktuellen Zeitpunkt bis zu einem beliebigen Zeitpunkt in einem möglichen Kollisionszeitraum zurücklegt, und der mögliche Kollisionszeitraum vom Startzeitpunkt bis zum Endzeitpunkt dauert.

2. Bestimmungsvorrichtung zur Kollisionsvorhersage eines autonomen Fahrzeugs nach Anspruch 1, wobei der Prozessor ferner dazu ausgestaltet ist, um: in Schritt 3) zu bestimmen, ob ein erster Unterschied zwischen einer Fahrstrecke des autonomen Fahrzeugs zum Startzeitpunkt der Kollision und dem eingestellten Sicherheitsabstand größer ist als der Mindestabstand, und in einem Fall, in dem der erste Unterschied größer ist als der Mindestabstand, zu bestimmen, dass das autonome Fahrzeugs nicht gleich mit dem Hindernis kollidiert.

3. Bestimmungsvorrichtung zur Kollisionsvorhersage eines autonomen Fahrzeugs nach Anspruch 1 oder 2, wobei der Prozessor ferner dazu ausgestaltet ist, um: in Schritt 3) zu bestimmen, ob ein zweiter Unterschied zwischen einer Fahrstrecke des autonomen Fahrzeugs zu einem beliebigen Zeitpunkt zwischen dem Startzeitpunkt der Kollision und dem Endzeitpunkt der Kollision und dem eingestellten Sicherheitsabstand geringer als oder gleich dem Mindestabstand ist, und in einem Fall, in dem der zweite Unterschied geringer als oder gleich dem Mindestabstand ist, zu bestimmen, dass das autonome Fahrzeugs nicht gleich mit dem Hindernis kollidiert.

4. Bestimmungsvorrichtung zur Kollisionsvorhersage eines autonomen Fahrzeugs nach Anspruch 1, wobei der Prozessor ferner dazu ausgestaltet ist, um: in Schritt 2) in einem Fall, in dem keine Schnittpunkte existieren, zu bestimmen, dass das autonome Fahrzeug nicht gleich mit dem Hindernis kollidiert, und das autonome Fahrzeug zu steuern, um eine Beschleunigung zu reduzieren, eine Beschleunigung zu erhöhen oder eine aktuelle Fahrbeschleunigung beizubehalten.

5. Bestimmungsvorrichtung zur Kollisionsvorhersage eines autonomen Fahrzeugs nach Anspruch 2, wobei der Prozessor ferner dazu ausgestaltet ist, um: in Schritt 3) in einem Fall, in dem der erste Unterschied größer ist als der Mindestabstand, das autonome Fahrzeug zu steuern, um eine aktuelle Fahrbeschleunigung beizubehalten oder eine Fahrbeschleunigung zu erhöhen.

6. Bestimmungsvorrichtung zur Kollisionsvorhersage eines autonomen Fahrzeugs nach Anspruch 3, wobei der Prozessor ferner dazu ausgestaltet ist, um: in Schritt 3) in einem Fall, in dem der zweite Unterschied geringer als oder gleich dem Mindestabstand ist, das autonome Fahrzeug zu steuern, um eine aktuelle Fahrbeschleunigung beizubehalten.

7. Bestimmungsvorrichtung zur Kollisionsvorhersage eines autonomen Fahrzeugs nach Anspruch 2, wobei der Prozessor ferner dazu ausgestaltet ist, um: in einem Fall, in dem der erste Unterschied geringer als oder gleich dem Mindestabstand ist, zu bestimmen, dass das autonome Fahrzeug gleich mit dem Hindernis kollidiert, und das autonome Fahrzeug zu steuern, um eine Fahrbeschleunigung zu reduzieren.

8. Bestimmungsvorrichtung zur Kollisionsvorhersage eines autonomen Fahrzeugs nach Anspruch 3, wobei der Prozessor ferner dazu ausgestaltet ist, um: in einem Fall, in dem der zweite Unterschied größer ist als der Mindestabstand, zu bestimmen, dass das autonome Fahrzeug gleich mit dem Hindernis kollidiert, und das autonome Fahrzeug zu steuern, um eine Fahrbeschleunigung zu reduzieren.

9. Bestimmungsvorrichtung zur Kollisionsvorhersage eines autonomen Fahrzeugs nach Anspruch 1, wobei der Prozessor ferner dazu ausgestaltet ist, um: in Schritt 1) gemäß der Bewegung des autonomen Fahrzeugs die vorhergesagten Wege des autonomen Fahrzeugs der Punkte auf den Rändern des autonomen Fahrzeugs unter Verwendung eines Tentakelalgorithmus zu planen.

**Revendications**

1. Dispositif de détermination d'une prédiction de collision d'un véhicule

   autonome, comprenant une mémoire et un processeur,
   dans lequel le processeur est configuré pour exécuter des instructions stockées dans la mémoire,
   dans lequel le processeur est en outre configuré pour :

   1) planifier des chemins d'obstacle prédits de points sur les bords d'un obstacle en fonction du mouvement de l'obstacle, et planifier des chemins de véhicule autonome prédits de points sur les bords d'un véhicule autonome en fonction du mouvement du véhicule autonome ;
   **caractérisé en ce que** le processeur est en outre configuré pour :

   2) déterminer si oui ou non il existe des intersections entre les chemins d'obstacle prédits et les chemins de véhicule autonome prédits : déterminer, dans le cas où il existe des intersections, des positions des intersections, des chemins de véhicule autonome prédits où les intersections sont situées et des points de bords de véhicule autonome correspondant aux intersections, sélectionner une longueur d'un chemin de véhicule autonome prédit le plus court entre chaque intersection et son point de bord de véhicule autonome correspondant à un moment en cours pour servir de distance minimale, utiliser un moment de la première intersection pour servir de moment de départ d'une collision, et utiliser un moment de la dernière intersection pour servir de moment de fin d'une collision ; et
   3) déterminer, en fonction d'une distance de déplacement de véhicule autonome, une distance de sécurité définie et la distance minimale, si le véhicule autonome est sur le point d'entrer en collision avec l'obstacle, dans lequel la distance de déplacement de véhicule autonome est une distance parcourue par le véhicule autonome depuis le moment en cours jusqu'à un moment quelconque pendant une durée de collision possible, et la durée de collision possible court depuis le moment de départ jusqu'au moment de fin.

2. Dispositif de détermination d'une prédiction de collision d'un véhicule autonome selon la revendication 1, dans lequel le processeur est en outre configuré pour : à l'étape 3), déterminer si oui ou non une première différence entre une distance de déplacement du véhicule autonome au moment de départ de la collision et la distance de sécurité définie est supérieure à la distance minimale, et dans le cas où la première différence est supérieure à la distance minimale, déterminer que le véhicule autonome n'est pas sur le point d'entrer en collision avec l'obstacle.

3. Dispositif de détermination d'une prédiction de collision d'un véhicule autonome selon la revendication 1 ou 2, dans lequel le processeur est en outre configuré pour : à l'étape 3), déterminer si oui ou non une seconde différence entre une distance de déplacement du véhicule autonome à un moment quelconque entre le moment de départ de la collision et le moment de fin de la collision et la distance de sécurité définie est inférieure ou égale à la distance minimale, et déterminer, dans le cas où la seconde différence est inférieure ou égale à la distance minimale, que le véhicule autonome n'est pas sur le point d'entrer en collision avec l'obstacle.

4. Dispositif de détermination d'une prédiction de collision d'un véhicule autonome selon la revendication 1, dans lequel le processeur est en outre configuré pour : à l'étape 2), déterminer, dans le cas où il n'existe pas d'intersections, que le véhicule autonome n'est pas sur le point d'entrer en collision avec l'obstacle, et commander au véhicule autonome de réduire une accélération, d'augmenter une accélération ou de maintenir une accélération en cours pour le déplacement.

5. Dispositif de détermination d'une prédiction de collision d'un véhicule autonome selon la revendication 2, dans lequel le processeur est en outre configuré pour : à l'étape 3), commander, dans le cas où la première différence est supérieure à la distance minimale, au véhicule autonome de maintenir une accélération en cours pour le déplacement ou d'augmenter une accélération pour le déplacement.

6. Dispositif de détermination d'une prédiction de collision d'un véhicule autonome selon la revendication 3, dans lequel le processeur est en outre configuré pour : à l'étape 3), commander, dans le cas où la seconde différence est inférieure ou égale à la distance minimale, au véhicule autonome de maintenir une accélération en cours pour le déplacement.

7. Dispositif de détermination d'une prédiction de collision d'un véhicule autonome selon la revendication 2, dans lequel le processeur est en outre configuré pour : déterminer, dans le cas où la première différence est inférieure ou égale à la distance minimale, que le véhicule autonome est sur le point d'entrer en collision avec l'obstacle, et commander au véhicule autonome de réduire une accélération pour le déplacement.

**8.** Dispositif de détermination d'une prédiction de collision d'un véhicule autonome selon la revendication 3, dans lequel le processeur est en outre configuré pour : déterminer, dans le cas où la seconde différence est supérieure à la distance minimale, que le véhicule autonome est sur le point d'entrer en collision avec l'obstacle, et commander au véhicule autonome de réduire une accélération pour le déplacement.

**9.** Dispositif de détermination d'une prédiction de collision d'un véhicule autonome selon la revendication 1, dans lequel le processeur est en outre configuré pour : à l'étape 1), planifier, en fonction du mouvement du véhicule autonome, les chemins de véhicule autonome prédits des points sur les bords du véhicule autonome en utilisant un algorithme de tentacule.

External input　　　　　Processing method

Obstacle
information

Planned auto
vehicle path
information

Auto vehicle
movement
information

Obstacle
collision
prediction

Auto
vehicle
speed
control
policy

## FIG. 1

*Tpre*

*tend*

*tstart*

*vy,ay*

*vx,ay*

Obstacle

Obstacle

Obstacle

Auto
vehicle

## FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109960261 A

- EP 3135550 A2